# EUROPÄISCHE PATENTSCHRIFT

(11) **EP 3 238 806 B1**
(45) Veröffentlichungstag und Bekanntmachung des Hinweises auf die Patenterteilung: **08.06.2022**
(21) Anmeldenummer: 17000555.7
(22) Anmeldetag: 04.04.2017
(51) Int. Cl.: B01D 46/10, A47L 9/10, B01D 46/52

(54) **VERWENDUNG EINES FILTERELEMENTS UND SCHMUTZSAUGER MIT FILTERAUFNAHME FÜR EIN SOLCHES FILTERELEMENT**
USE OF A FILTER ELEMENT AND SUCTION CLEANER WITH A FILTER HOLDER FOR SUCH A FILTER ELEMENT
UTILISATION D'UN ÉLÉMENT DE FILTRE ET ASPIRATEUR COMPRENANT UN PORTE-FILTRE DESTINÉ À UN TEL ÉLÉMENT DE FILTRE

(30) Priorität: 25.04.2016 DE 102016005007
(43) Veröffentlichungstag der Anmeldung: 01.11.2017
(73) Patentinhaber: Nilfisk A/S, 2605 Brøndby (DK)
(72) Erfinder: Fønss, Anders, 9260 Gistrup (DK)
(74) Vertreter: Samson & Partner Patentanwälte mbB

(56) Entgegenhaltungen:
- EP-A2- 0 982 062
- WO-A1-2009/150165
- WO-A1-2013/104791
- DE-A1-102014 007 413
- DE-U1- 20 115 642
- DE-U1-202015 101 156

## Beschreibung

Die Erfindung betrifft die Verwendung eines Filterelements für einen Schmutzsauger sowie einen Schmutzsauger mit Filteraufnahme für ein solches Filterelement.

Die DE 20 2015 101 156 U1 offenbart ein Filterelement für einen Schmutzsauger mit einem Filterrahmen, an welchem ein Filtermedium befestigt ist, wobei an dem Filterrahmen eine umlaufende Dichtung angeordnet ist, deren innere Umfangsfläche an einer äußeren Umfangsfläche des Filterrahmens angeordnet ist. Die Dichtung weist einen radial über den Filterrahmen überstehenden Abschnitt auf. Derartige Filterelemente können beispielsweise rechteckig oder auch rund ausgeführt werden und werden insbesondere für Haushaltssauger zum Aufsaugen von nassem oder trockenem Schmutz verwendet. In der Regel ist der Schmutzsauger derart ausgebildet, dass das Filterelement sehr einfach ausgetauscht werden kann.

Bei anderen Schmutzsaugern gibt es eine sogenannte Abreinigungsfunktion. Wenn sich der Filter mit Schmutz zugesetzt hat, wird der Saugstrom umgekehrt, so dass die auf dem Filterelement haftenden Schmutzpartikel vom Filterelement abgeblasen werden und in den Schmutzbehälter fallen, welcher dann entleert werden kann. Andere Abreinigungsverfahren arbeiten mechanisch, wobei der Filter abgekratzt oder abgeschüttelt wird. Für dieses Abreinigungsverfahren muss das Filterelement im Wesentlichen stabil ausgebildet sein und insbesondere das Filtermaterial, beispielsweise ein Filterflies, muss haltbar und langlebig sein.

Als Filtermaterialien werden austauschbare Papierfilter oder Filtervliese aus Kunststoff verwendet.

Da das Filtermaterial eines Filterelementes mit Filterrahmen stabiler und langlebiger ist, als beispielsweise einfache Papierfilter, ist auch das Gewicht bzw. die Masse des Filterelements relativ groß, so dass das in den Schmutzsauger eingesetzte Filterelement einer höheren mechanischen Beanspruchung und Abnutzung unterworfen wird.

Insbesondere muss das Filterelement gegenüber der Filteraufnahme bzw. dem Schmutzsauger abgedichtet werden, so dass keine Fremdluft das Filterelement ungefiltert passieren kann.

Insbesondere die Abdichtung des Filterelementes wird im Saugbetrieb und Abreinigungsbetrieb mechanisch hoch beansprucht.

Bei Schmutzsaugern für den Nassbetrieb muss ebenfalls sichergestellt sein, dass die Abdichtung des Filterelementes auch bei Nassbetrieb gewährleistet ist.

Die WO 2009/150165 A1 offenbart ein Filterelement mit einem Filtermedium, wobei an dem Filtermedium eine umlaufende Dichtung angeordnet ist. Die Dichtung weist einen über das Filtermedium radial überstehenden Abschnitt auf, wobei an einer Stirnseite des überstehenden Abschnitts der Dichtung eine Nut angeordnet ist, die für den Eingriff einer Dichtungsfläche eines Unterteils einer Filteraufnahme ausgebildet ist. An der gegenüberliegenden Stirnseite des überstehenden Abschnitts der Dichtung ist eine Dichtungsfläche angeordnet.

Ähnliche Filterelemente sind in der DE 10 2014 007 413 A1 und der EP 0 982 062 A2 offenbart.

Aus der Druckschrift DE 20115642 U1 ist die Verwendung eines Filterelements für einen Schmutzsauger bekannt.

Es ist die Aufgabe der vorliegenden Erfindung, die Verwendung eines Filterelements für einen Schmutzsauger anzugeben, welches widerstandsfähig gegen mechanische Beanspruchung ist, eine gute Dichtwirkung und mechanische Langlebigkeit der Dichtung aufweist sowie einfach und sicher in die Filteraufnahme des Schmutzsaugers einsetzbar ist.

Zur Lösung dieser Aufgabe werden die Verwendung eines Filterelements und ein Schmutzsauger gemäß den Merkmalen der unabhängigen Patentansprüche vorgeschlagen.

Das gemäß Anspruch 1 für einen Schmutzsauger verwendete Filterelement weist eine an einer Stirnseite des radial überstehenden Abschnitts der Dichtung des Filterelements angeordnete Nut und eine an der gegenüberliegenden Stirnseite des radial überstehenden Abschnitts der Dichtung angeordnete Dichtungsfläche auf.

Das Filterelement kann in einem entsprechenden Schmutzsauger mit Filteraufnahme gemäß Anspruch 5 eingesetzt werden.

Die Filteraufnahme des Schmutzsaugers weist ein Unterteil mit einer Dichtungsfläche sowie ein Oberteil mit einer Dichtungsfläche auf, wobei das Filterelement mittels des überstehenden Abschnitts der Dichtung zwischen den Dichtungsflächen des Unterteils und des Oberteils gehalten ist.

An einer Stirnseite des überstehenden Abschnitts der Dichtung des Filterelements ist eine Nut angeordnet, wobei die Dichtungsfläche des Unterteils der Filteraufnahme in diese Nut eingreift.

An der gegenüberliegenden Stirnseite des überstehenden Abschnitts der Dichtung des Filterelements ist ebenfalls eine Dichtungsfläche angeordnet, die an der Dichtungsfläche des Oberteils der Filteraufnahme anliegt.

Die Dichtung des Filterelements steht radial über den Filterrahmen des Filterelements hinaus. Dieser radial überstehende Abschnitt der Dichtung umfasst die Nut und die profilierte Dichtungsfläche. Die Dichtungsfläche sowie die Nut sind daher radial außerhalb des Filterrahmens angeordnet.

Gemäß einer Alternative in Anspruch 1 wird eine Dichtung des Filterelements verwendet, deren Dichtungsfläche profiliert ausgebildet und mindestens eine von der Dichtungsfläche abstehende Rippe aufweist. Es können auch mehrere solche Rippen nebeneinander liegend an der Dichtungsfläche der Dichtung angeordnet sein.

Diese Rippe ist umlaufend ausgebildet und erstreckt sich über die gesamte Dichtungsfläche der Dichtung des Filterelements.

Die Rippe kann beispielsweise einen dreieckigen Querschnitt mit einer nach oben gerichteten Spitze aufweisen, die vorzugsweise abgerundet ist. Die Rippe kann aber auch einen quadratischen oder rechteckigen oder anderen geeigneten Querschnitt aufweisen, der eine gute Dichtwirkung an der gegenüberliegenden Dichtfläche des Oberteils der Filteraufnahme aufweist.

Der radial überstehende Abschnitt der Dichtung des Filterelements kann relativ groß und insbesondere für die lagerichtige Positionierung des Filterelements in der Filteraufnahme geeignet sein.

Auf Grund der Nut in der unteren Stirnseite des überstehenden Abschnitts der Dichtung lässt sich das Dichtungselement auf einem durch das Unterteil der Filteraufnahme gebildeten Rand genau positionieren, wobei der Rand mit einer Dichtungsfläche in die Nut der Dichtung des Filterelements eingreift und somit abdichtend positioniert ist.

Der überstehende Abschnitt der Dichtung sorgt aber auch für weniger Abnutzung der Dichtung während des Saugbetriebes und der Filterabreinigung, da durch den überstehenden Abschnitt, insbesondere die Nut, der Filter in Position gehalten wird, insbesondere bei Einwirkung von horizontalen Kräften, die auf das Filterelement bei der Abreinigung und im Saugbetrieb einwirken.

Abgesehen von der Nut und der Rippe bzw. Rille weist die Dichtung einen vorzugsweise rechteckigen Querschnitt auf. Die Dichtung kann jedoch auch einen ovalen, dreieckigen oder einen anderen geeigneten Querschnitt aufweisen.

Gemäß einer anderen Alternative in Anspruch 1 wird eine Dichtung mit einer profilierten oberen Dichtungsfläche verwendet, die anstelle einer umlaufenden Rippe mindestens eine umlaufende Rille aufweist.

Es können auch mehrere umlaufende Rillen vorhanden sein.

Entsprechend weist die gegenüberliegende Dichtungsfläche des Oberteils der Filteraufnahme eine umlaufende Rippe auf, die in die umlaufende Rille der Dichtung des Filterelements dichtend eingreift.

Um die axialen mechanischen Kräfte aufzunehmen, welche die Filteraufnahme auf die Dichtung ausübt, ist die Rippe oder Rille der Dichtungsfläche der Dichtung vorzugsweise direkt gegenüberliegend der Nut der Dichtung angeordnet.

Somit liegen die durch das Unterteil der Filteraufnahme und das Oberteil der Filteraufnahme auf die Dichtung ausgeübten Kräfte direkt auf einer Linie und führen nicht zu Scherkräften, welche die Dichtung beschädigen oder unzulässig verformen.

Das Filtermedium des Filterelements ist vorzugsweise ein Filtervlies, welches beispielsweise als Faltenfilter ausgebildet ist. Es kann jedoch auch ein flaches Filtermedium verwendet werden. Das Filtermedium kann aus Papier oder Kunststoff bestehen.

Am Oberteil der Filteraufnahme kann eine separate Dichtung angeordnet sein, welche die Dichtungsfläche des Oberteils der Filteraufnahme ausbildet.

Gemäß einer Alternative des Schmutzsaugers von Anspruch 5 ist die Dichtungsfläche der Dichtung des Filterelementes profiliert ausgebildet und weist mindestens eine von der Dichtungsfläche abstehende Rippe auf, wobei die Rippe der Dichtungsfläche der Dichtung an der Dichtungsfläche des Oberteils der Filteraufnahme anliegt. Die Dichtungsfläche des Oberteils der Filteraufnahme kann profiliert sein und mindestens eine in der Dichtungsfläche vorgesehene Rille aufweisen, wobei die Rippe der Dichtung des Filterelements in die Rille der Dichtungsfläche des Oberteils eingreift.

Gemäß einer anderen Alternative des Schmutzsaugers von Anspruch 5 ist die Dichtungsfläche des Oberteils der Filteraufnahme profiliert und weist mindestens eine von der Dichtungsfläche abstehende Rippe auf, wobei die Rippe der Dichtungsfläche des Oberteils an der Dichtungsfläche der Dichtung des Filterelements anliegt.

Die Dichtungsfläche der Dichtung des Filterelements ist profiliert ausgebildet ist und weist mindestens eine Rille auf, wobei die Rippe der Dichtungsfläche des Oberteils geführte Aufnahme in die Rille der Dichtung des Filterelements eingreift.

Die Dichtung des Filterelements besteht vorzugsweise aus einem wasser- und lösungsmittelfesten Material mit guten Abrieb- und Verschleißeigenschaften, wie z. B. aus Gummi oder einem gummiartigen Material, PU-Schaum oder ähnlichem.

Die Erfindung wird nachfolgend anhand der Zeichnungen und eines bevorzugten Ausführungsbeispiels beschrieben.

Aus den Zeichnungen und ihrer Beschreibung ergeben sich weitere Merkmale und Vorteile der Erfindung.
- Figur 1: zeigt eine Ansicht eines erfindungsgemäß verwendeten Filterelements.
- Figur 2: zeigt einen Teilschnitt des Oberteils und Unterteils der Filteraufnahme mit dem dazwischen angeordneten Filterelement.
- Figur 3: zeigt eine im Vergleich zu Figur 2 abgewandelte Ausgestaltung des Oberteils und Unterteils der Filteraufnahme mit dem dazwischen angeordneten Filterelement.

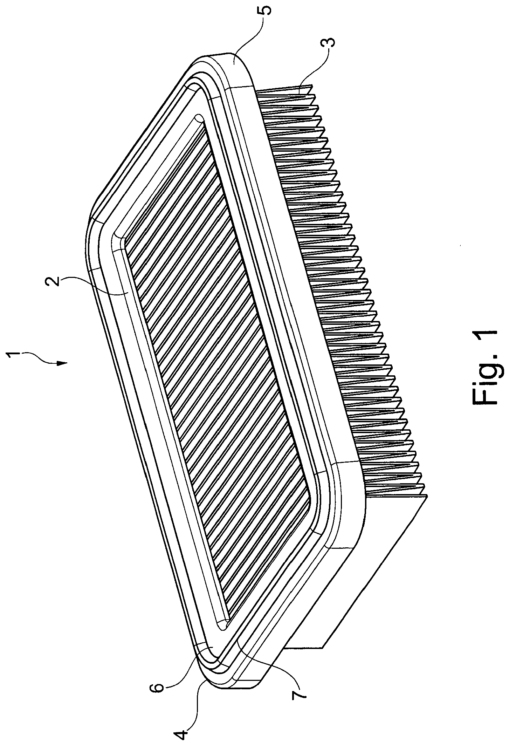

Figur 1 zeigt eine perspektivische Ansicht des Filterelementes 1. Das Filterelement 1 besitzt beispielsweise einen rechteckigen Filterrahmen 2, an welchem ein Filtermedium 3 befestigt ist. Der Filterrahmen kann beispielsweise aus Kunststoff und/oder Metall bestehen.

Das Filtermedium 3 kann beispielsweise als Faltenfilter ausgebildet sein, der aus einem Papier- oder Kunststoffvlies besteht.

Ein derartiges Filterelement 1 wird in einer Filteraufnahme eines Schmutzsaugers installiert. Ein Austauschen des Filterelements 1 soll schnell und einfach möglich sein.

Zur Abdichtung des Filterelements 1 gegenüber der Filteraufnahme ist am äußeren Rand des Filterrahmens 2 eine umlaufende Dichtung 4 angeordnet, die aus einem gummiartigen Material oder einem weichen Kunststoff besteht. Die Ecken 5 der Dichtung 4 sind vorzugsweise abgerundet.

Die Dichtung 4 weist eine obere Dichtungsfläche 6 auf. Auf der oberen Dichtungsfläche 6 ist eine umlaufende Rippe 7 vorgesehen, die für eine besonders gute Abdichtung gegenüber der Filteraufnahme sorgt, wie nachfolgend beschrieben ist.

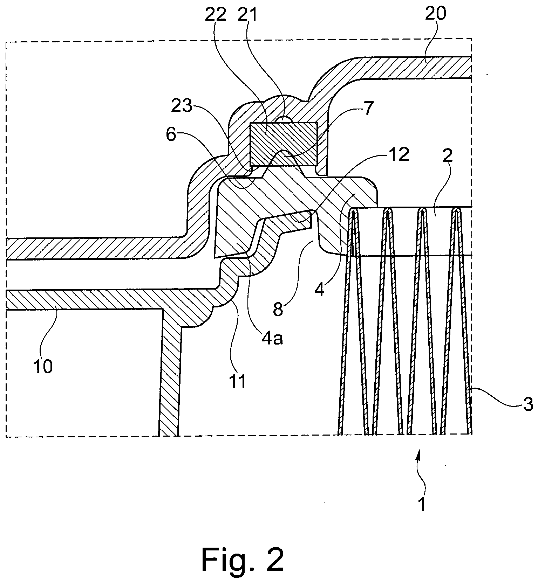

Figur 2 zeigt einen Teilschnitt durch die Anordnung des Filterelements 1 und der Filteraufnahme.

Man erkennt das Filterelement 1 mit dem Filterrahmen 2 und dem Filtermedium 3. Am Rand des Filterrahmens 2 ist die Dichtung 4 befestigt.

Die Dichtung 4 liegt einerseits mit einer inneren Umfangsfläche an einer äußeren Umfangsfläche des Filterrahmens 2 an und liegt andererseits auf der Oberseite des Filterrahmens 2 auf.

Die Dichtung 4 ist beispielsweise an den Filterrahmen 2 angespritzt, so dass sich eine sichere und dichte Verbindung zwischen dem Filterrahmen 2 und der Dichtung 4 ergibt.

Die Dichtung 4 bildet einen radialen Überstand 4a über den Filterrahmen 2. Der radial überstehende Abschnitt 4a der Dichtung 4 erstreckt sich etwa in der Ebene des Filterrahmens 2 radial über den Rand des Filterrahmens 2 hinaus.

Auf seiner unteren Stirnfläche weist der überstehende Abschnitt 4a der Dichtung 4 eine Nut 8 auf. Auf seiner oberen Stirnfläche weist der überstehende Abschnitt 4a der Dichtung 4 eine Dichtungsfläche 6 auf.

Auf der oberen Dichtungsfläche 6 der Dichtung 4 ist eine von der Dichtungsfläche nach oben abstehende Rippe 7 angeordnet.

Die Filteraufnahme besteht beispielsweise aus einem Unterteil 10 und einem Oberteil 20. Zum Einbau bzw. zum Wechseln des Filterelementes 1 kann das Oberteil 20 vom Unterteil 10 getrennt werden, indem es beispielsweise weggeklappt oder abgehoben wird.

Das Unterteil 10 der Filteraufnahme weist einen radial nach innen gerichteten umlaufenden Rand 11 auf, der an seinem äußeren Abschnitt eine etwa horizontal verlaufende Dichtungsfläche 12 bildet.

Das Filterelement 1 ist derart in das Unterteil 10 der Filteraufnahme eingelegt, dass der äußere Rand der Filteraufnahme 10 mit der Dichtungsfläche 12 in die Nut 8 der Dichtung 4 des Filterelements 1 eingreift.

Hierbei legt sich die Dichtungsfläche 12 des Unterteils 10 der Filteraufnahme an die Bodenfläche der Nut 8 der Dichtung 4 des Filterelements 1 an. Dadurch ergibt sich eine mechanisch stabile und vor allem abdichtende Positionierung des Filterelements 1 auf dem Unterteil 10 der Filteraufnahme.

Nachdem das Filterelement 1 auf dem Unterteil 10 der Filteraufnahme positioniert ist, kann das Oberteil 20 der Filteraufnahme auf das Unterteil 10 aufgelegt und an diesem befestigt werden.

Das Oberteil 20 der Filteraufnahme weist eine Nut 21 auf, welche der oberen Dichtungsfläche 6 der Dichtung 4 des Filterelements 1 axial gegenüber liegt. In der Nut 21 der des Oberteils 20 der Filteraufnahme ist vorzugsweise eine Dichtung 22 angeordnet, die aus gummiartigem Material oder einem weichen Kunststoff besteht.

Wenn das Filterelement 1 in der Filteraufnahme 10, 20 angeordnet ist, wird die nach oben abstehende Rippe 7 der Dichtung 4 des Filterelements an die untere Dichtungsfläche 23 der Dichtung 22 des Oberteils 20 gepresst. Die Rippe 7 der Dichtung 4 kann die elastische Dichtungsfläche 23 der Dichtung 4 teilweise verformen, so dass sich eine mechanisch stabile und gute Abdichtung zwischen der Dichtung 22 des Oberteils 20 der Filteraufnahme und der Dichtung 4 des Filterelements 1 ergibt.

Die mechanischen Kräfte, die durch das Oberteil 20 auf die Dichtung 4 des Filterelements 1 und die Dichtungsfläche 12 des Unterteils 10 der Filteraufnahme ausgeübt werden, verläuft entlang einer senkrechten, also axial, verlaufenden Linie. Dadurch wird die Dichtung 4 des Filterelements 1 mechanisch stabil zwischen dem Unterteil 10 und dem Oberteil 20 der Filteraufnahme gehalten.

Insbesondere werden keine Scherkräfte oder seitliche Kräfte auf die Dichtung 4 ausgeübt, welche die Dichtung 4 des Filterelements 1 unzulässig verformen könnten und somit eine mechanische Belastung oder übermäßige Abnutzung nach sich ziehen würden.

Auch die mechanische Beanspruchung auf die Dichtung 4 während des Betriebes des Schmutzsaugers und während des Abreinigungsvorgangs des Filterelements 1 bleiben gering.

Ein wichtiges Merkmal ist, dass die Dichtung 4 radial über das Filterelement 1 übersteht, so dass die Befestigung der Dichtung 4 am Filterelement und die Dichtungsflächen zur Abdichtung an der Filteraufnahme 10, 20 voneinander unabhängig sind.

Die Dichtung 22 des Oberteils 20 der Filteraufnahme weist eine Rille (nicht dargestellt) auf, die oberhalb der Rippe 7 der Dichtung 4 des Filterelements 1 angeordnet ist. Wenn das Oberteil 20 der Filteraufnahme installiert ist, greift die Rippe 7 der Dichtung 4 des Filterelements 1 in die Rille der Dichtung 22 des Oberteils 20 ein und ergibt so eine gute Dichtwirkung.

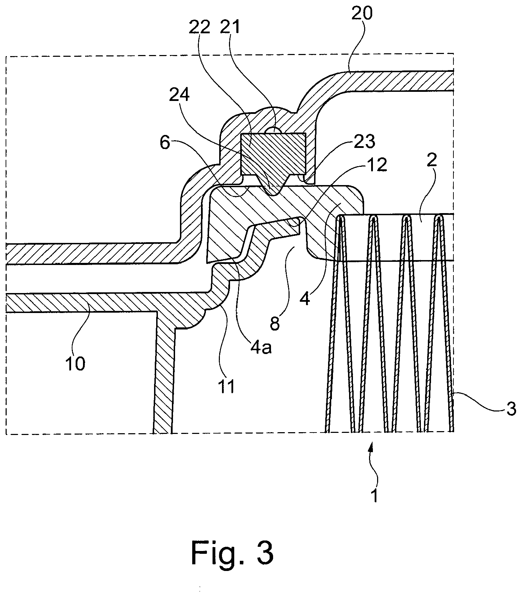

Figur 3 zeigt eine abgewandelte Ausgestaltung von Figur 2, wobei gleiche Bauteile mit denselben Bezugszeichen bezeichnet sind.

Im Wesentlichen gilt für Figur 3 die Beschreibung von Figur 2.

Die Dichtung 22, die in der Nut 21 des Oberteils 20 der Filteraufnahme angeordnet ist, weist eine nach unten gerichtete Rippe 24 auf, die in Richtung der Dichtungsfläche 6 des Filterelements 1 zeigt.

Gegenüberliegend der Rippe 24 der Dichtung 22 des Oberteils der Filteraufnahme ist eine Rille (nicht dargestellt) in der Dichtungsfläche 6 der Dichtung 4 angeordnet.

### Liste der Bezugszeichen

- 1: Filterelement
- 2: Filterrahmen
- 3: Filtermedium
- 4: Dichtung
- 4a: überstehender Abschnitt
- 5: Ecke
- 6: Dichtungsfläche
- 7: Rippe
- 8: Nut

- 10: Unterteil der Filteraufnahme
- 11: Rand
- 12: Dichtungsfläche

- 20: Oberteil der Filteraufnahme
- 21: Nut
- 22: Dichtung
- 23: Dichtungsfläche
- 24: Rippe

## Patentansprüche

1. Verwendung eines Filterelements (1) für einen Schmutzsauger, wobei das Filterelement (1) einen Filterrahmen (2) aufweist, an welchem ein Filtermedium (3) befestigt ist, wobei an dem Filterrahmen (2) eine umlaufende Dichtung (4) angeordnet ist, deren innere Umfangsfläche an einer äußeren Umfangsfläche des Filterrahmens (2) angeordnet ist und einen über den Filterrahmen (2) radial überstehenden Abschnitt (4a) aufweist, wobei an einer Stirnseite des überstehenden Abschnitts (4a) der Dichtung (4) eine Nut (8) angeordnet ist, und an der gegenüberliegenden Stirnseite des überstehenden Abschnitts (4a) der Dichtung (4) eine Dichtungsfläche (6) angeordnet ist, wobei die Dichtungsfläche (6) der Dichtung (4) profiliert ausgebildet ist und mindestens eine von der Dichtungsfläche (6) abstehende umlaufende Rippe (7) oder mindestens eine umlaufende Rille aufweist.

2. Verwendung eines Filterelements (1) für einen Schmutzsauger gemäß Anspruch 1, wobei die Rippe (7) oder Rille der Dichtungsfläche (6) der Dichtung (4) axial gegenüberliegend der Nut (8) der Dichtung (4) angeordnet ist.

3. Verwendung eines Filterelements (1) für einen Schmutzsauger gemäß Anspruch 1 oder 2, wobei das Filtermedium (3) aus einem Filterflies besteht.

4. Verwendung eines Filterelements (1) für einen Schmutzsauger gemäß einem der Ansprüche 1 bis 3, wobei das Filtermedium (3) als Faltenfilter oder Flachfilter ausgebildet ist.

5. Schmutzsauger mit einer Filteraufnahme (10, 20) und einem auswechselbaren Filterelement (1), wobei das Filterelement (1) einen Filterrahmen (2) umfasst, an welchem ein Filtermedium (3) befestigt ist, wobei an dem Filterrahmen (2) eine umlaufende Dichtung (4) angeordnet ist, die mit einer inneren Umfangsfläche an einer äußeren Umfangsfläche des Filterrahmens (2) angeordnet ist und einen über den Filterrahmen (2) radial überstehenden Abschnitt (4a) aufweist, wobei die Filteraufnahme ein Unterteil (10) mit einer Dichtungsfläche (12) und ein Oberteil (20) mit einer Dichtungsfläche (23) aufweist, und das Filterelement (1) zwischen den Dichtungsflächen (12, 23) des Unterteils (10) und des Oberteils (20) gehalten ist, wobei an einer Stirnseite des überstehenden Abschnitts (4a) der Dichtung (4) des Filterelements (1) eine Nut (8) angeordnet ist, wobei die Dichtungsfläche (12) des Unterteils (10) der Filteraufnahme in die Nut (8) des Filterelements (1) eingreift, wobei an der gegenüberliegenden Stirnseite des überstehenden Abschnitts (4a) der Dichtung (4) eine Dichtungsfläche (6) angeordnet ist, und das Oberteil (20) der Filteraufnahme eine Nut (21) aufweist, welche der Dichtungsfläche (6) der Dichtung (4) des Filterelements (1) axial gegenüber liegt, wobei in der Nut (21) eine Dichtung (22) mit der Dichtungsfläche (23) angeordnet ist, und die Dichtungsfläche (6) der Dichtung (4) des Filterelements (1) an der Dichtungsfläche (23) des Oberteils anliegt; wobei
- die Dichtungsfläche (6) der Dichtung (4) des Filterelements (1) profiliert ausgebildet ist und mindestens eine von der Dichtungsfläche (6) abstehende Rippe (7) aufweist, wobei die Rippe (7) der Dichtung (4) an der Dichtungsfläche (23) des Oberteils (20) der Filteraufnahme anliegt; oder
- die Dichtungsfläche (23) des Oberteils (20) der Filteraufnahme profiliert ausgebildet ist und mindestens eine von der Dichtungsfläche (23) abstehende Rippe (24) aufweist, wobei die Rippe (24) der Dichtungsfläche (23) des Oberteils (20) an der Dichtungsfläche (6) der Dichtung (4) des Filterelements (1) anliegt, wobei die Dichtungsfläche (6) der Dichtung (4) des Filterelements (1) profiliert ausgebildet ist und mindestens eine Rille aufweist, wobei die Rippe (24) der Dichtungsfläche (23) des Oberteils (20) der Filteraufnahme in die Rille der Dichtung (4) des Filterelements (1) eingreift.

6. Schmutzsauger nach Anspruch 5, wobei die Dichtungsfläche (23) der Dichtung (22) des Oberteils (20) der Filteraufnahme profiliert ist und mindestens eine in der Dichtungsfläche (23) der Dichtung (22) vorgesehene Rille aufweist, wobei die Rippe (7) der Dichtung (4) des Filterelements (1) in die Rille der Dichtungsfläche (23) der Dichtung (22) des Oberteils (20) der Filteraufnahme eingreift.

7. Schmutzsauger nach einem der Ansprüche 5 oder 6, wobei das Filtermedium (3) aus einem Filtervlies besteht.

8. Schmutzsauger nach einem der Ansprüche 5 bis 7, wobei das Filtermedium (3) als Faltenfilter oder Flachfilter ausgebildet ist.

## Claims

1. Use of a filter element (1) for a suction cleaner, wherein the filter element (1) has a filter frame (2), on which a filter medium (3) is fastened, wherein the filter frame (2) has arranged on it an all-round seal (4), of which the inner peripheral surface is arranged on an outer peripheral surface of the filter frame (2) and has a portion (4a) projecting radially beyond the filter frame (2), wherein a groove (8) is arranged on one end side of the projecting portion (4a) of the seal (4), and a sealing surface (6) is arranged on the opposite end side of the projecting portion (4a) of the seal (4), wherein the sealing surface (6) of the seal (4) is of profiled design and has at least one all-round rib (7), which projects from the sealing surface (6), or at least one all-round channel.

2. Use of a filter element (1) for a suction cleaner according to Claim 1, wherein the rib (7) or channel of the sealing surface (6) of the seal (4) is arranged axially opposite the groove (8) of the seal (4).

3. Use of a filter element (1) for a suction cleaner according to Claim 1 or 2, wherein the filter medium (3) consists of a filter fleece material.

4. Use of a filter element (1) for a suction cleaner according to one of Claims 1 to 3, wherein the filter medium (3) is in the form of a pleated filter or flat filter.

5. Suction cleaner having a filter mount (10, 20) and an interchangeable filter element (1), wherein the filter element (1) comprises a filter frame (2), on which a filter medium (3) is fastened, wherein the filter frame (2) has arranged on it an all-round seal (4), which has an inner peripheral surface arranged on an outer peripheral surface of the filter frame (2) and which has a portion (4a) projecting radially beyond the filter frame (2), wherein the filter mount has a lower part (10) with a sealing surface (12) and an upper part (20) with a sealing surface (23), and the filter element (1) is retained between the sealing surfaces (12, 23) of the lower part (10) and of the upper part (20), wherein a groove (8) is arranged on one end side of the projecting portion (4a) of the seal (4) of the filter element (1), wherein the sealing surface (12) of the lower part (10) of the filter mount engages in the groove (8) of the filter element (1), wherein a sealing surface (6) is arranged on the opposite end side of the projecting portion (4a) of the seal (4), and the upper part (20) of the filter mount has a groove (21), which is located axially opposite the sealing surface (6) of the seal (4) of the filter element (1), wherein a seal (22) with the sealing surface (23) is arranged in the groove (21), and the sealing surface (6) of the seal (4) of the filter element (1) butts against the sealing surface (23) of the upper part; wherein
- the sealing surface (6) of the seal (4) of the filter element (1) is of profiled design and has at least one rib (7) projecting from the sealing surface (6), wherein the rib (7) of the seal (4) butts against the sealing surface (23) of the upper part (20) of the filter mount; or
- the sealing surface (23) of the upper part (20) of the filter mount is of profiled design and has at least one rib (24) projecting from the sealing surface (23), wherein the rib (24) of the sealing surface (23) of the upper part (20) butts against the sealing surface (6) of the seal (4) of the filter element (1), wherein the sealing surface (6) of the seal (4) of the filter element (1) is of profiled design and has at least one channel, wherein the rib (24) of the sealing surface (23) of the upper part (20) of the filter mount engages in the channel of the seal (4) of the filter element (1).

6. Suction cleaner according to Claim 5, wherein the sealing surface (23) of the seal (22) of the upper part (20) of the filter mount is profiled and has at least one channel provided in the sealing surface (23) of the seal (22), wherein the rib (7) of the seal (4) of the filter element (1) engages in the channel of the sealing surface (23) of the seal (22) of the upper part (20) of the filter mount.

7. Suction cleaner according to either of Claims 5 or 6, wherein the filter medium (3) consists of a filter fleece material.

8. Suction cleaner according to one of Claims 5 to 7, wherein the filter medium (3) is in the form of a pleated filter or flat filter.

## Revendications

1. Utilisation d'un élément de filtre (1) pour un aspirateur, dans laquelle l'élément de filtre (1) présente un châssis de filtre (2) sur lequel est fixé un milieu filtrant (3), dans laquelle est disposé sur le châssis de filtre (2) un joint d'étanchéité (4) périphérique, dont la surface périphérique intérieure est disposée sur une surface périphérique extérieure du châssis de filtre (2) et présente une section (4a) dépassant radialement du châssis de filtre (2), dans laquelle une rainure (8) est disposée sur un côté frontal de la section (4a) qui dépasse du joint d'étanchéité (4) et une surface d'étanchéité (6) est disposée sur le côté frontal opposé de la section (4a) qui dépasse du joint d'étanchéité (4), dans laquelle la surface d'étanchéité (6) du joint d'étanchéité (4) est réalisée de manière profilée et présente au moins une nervure (7) périphérique faisant saillie de la surface d'étanchéité (6) ou présente au moins un sillon périphérique.

2. Utilisation d'un élément de filtre (1) pour un aspirateur selon la revendication 1, dans laquelle la nervure (7) ou le sillon de la surface d'étanchéité (6) du joint d'étanchéité (4) est disposée ou disposé axialement en face de la rainure (8) du joint d'étanchéité (4).

3. Utilisation d'un élément de filtre (1) pour un aspirateur selon la revendication 1 ou 2, dans laquelle le milieu filtrant (3) est constitué d'un non-tissé filtrant.

4. Utilisation d'un élément de filtre (1) pour un aspirateur selon l'une quelconque des revendications 1 à 3, dans laquelle le milieu filtrant (3) est réalisé en tant que filtre plissé ou filtre plat.

5. Aspirateur avec un porte-filtre (10, 20) et un élément de filtre (1) interchangeable, dans lequel l'élément de filtre (1) comprend un châssis de filtre (2) sur lequel un milieu filtrant (3) est fixé, dans lequel est disposé sur le châssis de filtre (2) un joint d'étanchéité (4) périphérique, qui est disposé par une surface périphérique intérieure sur une surface périphérique extérieure du châssis de filtre (2) et présente une section (4a) dépassant radialement du châssis de filtre (2), dans lequel le porte-filtre présente une partie inférieure (10) avec une surface d'étanchéité (12) et une partie supérieure (20) avec une surface d'étanchéité (23), et l'élément de filtre (1) est maintenu entre les surfaces d'étanchéité (12, 23) de la partie inférieure (10) et de la partie supérieure (20), dans lequel une rainure (8) est disposée sur un côté frontal de la section (4a) qui dépasse du joint d'étanchéité (4) de l'élément de filtre (1), dans lequel la surface d'étanchéité (12) de la partie inférieure (10) du porte-filtre vient en prise avec la rainure (8) de l'élément de filtre (1), dans lequel une surface d'étanchéité (6) est disposée sur le côté frontal opposé de la section (4a) qui dépasse du joint d'étanchéité (4), et la partie supérieure (20) du porte-filtre présente une rainure (21), laquelle est axialement en face à la surface d'étanchéité (6) du joint d'étanchéité (4) de l'élément de filtre (1), dans lequel un joint d'étanchéité (22) avec la surface d'étanchéité (23) est disposé dans la rainure (21), et dans lequel la surface d'étanchéité (6) du joint d'étanchéité (4) de l'élément de filtre (1) repose sur la surface d'étanchéité (23) de la partie supérieure ; dans lequel
- la surface d'étanchéité (6) du joint d'étanchéité (4) de l'élément de filtre (1) est réalisée de manière profilée et présente au moins une nervure (7) faisant saillie de la surface d'étanchéité (6), dans lequel la nervure (7) du joint d'étanchéité (4) repose sur la surface d'étanchéité (23) de la partie supérieure (20) du porte-filtre ; ou
- la surface d'étanchéité (23) de la partie supérieure (20) du porte-filtre est réalisée de manière profilée et présente au moins une nervure (24) faisant saillie de la surface d'étanchéité (23), dans lequel la nervure (24) de la surface d'étanchéité (23) de la partie supérieure (20) repose sur la surface d'étanchéité (6) du joint d'étanchéité (4) de l'élément de filtre (1), dans lequel la surface d'étanchéité (6) du joint d'étanchéité (4) de l'élément de filtre (1) est réalisée de manière profilée et présente au moins un sillon, dans lequel la nervure (24) de la surface d'étanchéité (23) de la partie supérieure (20) du porte-filtre vient en prise avec le sillon du joint d'étanchéité (4) de l'élément de filtre (1).

6. Aspirateur selon la revendication 5, dans lequel la surface d'étanchéité (23) du joint d'étanchéité (22) de la partie supérieure (20) du porte-filtre est profilée et présente au moins un sillon prévu dans la surface d'étanchéité (23) du joint d'étanchéité (22), dans lequel la nervure (7) du joint d'étanchéité (4) de l'élément de filtre (1) vient en prise avec le sillon de la surface d'étanchéité (23) du joint d'étanchéité (22) de la partie supérieure (20) du porte-filtre.

7. Aspirateur selon l'une quelconque des revendications 5 ou 6, dans lequel le milieu filtrant (3) est constitué d'un non-tissé filtrant.

8. Aspirateur selon l'une quelconque des revendications 5 à 7, dans lequel le milieu filtrant (3) est réalisé en tant que filtre plissé ou filtre plat.
